# EUROPÄISCHE PATENTSCHRIFT

(11) **EP 3 310 181 B1**
(45) Veröffentlichungstag und Bekanntmachung des Hinweises auf die Patenterteilung: **01.06.2022**
(21) Anmeldenummer: 16730369.2
(22) Anmeldetag: 17.06.2016
(51) Int. Cl.: A23G 1/00, A23G 1/21, A23G 1/54

(54) **VERFAHREN ZUM HERSTELLEN VON EINEM VERZEHRPRODUKT**
METHOD FOR PRODUCING A CONSUMABLE PRODUCT
PROCÉDÉ POUR FABRIQUER UN PRODUIT ALIMENTAIRE

(30) Priorität: 19.06.2015 DE 102015109824; 03.08.2015 DE 102015112735
(43) Veröffentlichungstag der Anmeldung: 25.04.2018
(73) Patentinhaber: KNOBEL, Guido, 8268 Salenstein (CH)
(72) Erfinder: KNOBEL, Guido, 8268 Salenstein (CH)
(74) Vertreter: Patentanwälte und Rechtsanwalt Weiß, Arat & Partner mbB
(86) Internationale Anmeldenummer: PCT/EP2016/063974
(87) Internationale Veröffentlichungsnummer: WO 2016/202962

(56) Entgegenhaltungen:
- EP-A1- 0 589 820
- EP-A1- 0 920 810
- EP-A1- 2 386 208
- EP-A1- 2 543 258
- EP-A2- 0 945 069
- WO-A1-95/32633
- WO-A1-03/094626
- DE-A1- 19 851 063
- DE-A1-102007 022 346
- DE-U1- 29 808 288

## Beschreibung

Die Erfindung betrifft ein Verfahren zum Herstellen von einem Verzehrprodukt, insbesondere Schokoladenprodukt, aus zumindest zwei Schalenformen, die zumindest teilweise an ihren Schalenrändern miteinander verbunden werden, wobei eine flüssige Verzehrmasse in eine Form eingefüllt und danach zumindest ein Stempel in die Verzehrmasse eingetaucht und durch zumindest teilweises Erstarren der Verzehrmasse in der Form dieser Verzehrmasse eine Schalenform gegeben wird, sowie eine Vorrichtung hierfür.

### Stand der Technik

Schokoladenprodukte werden in vielfältiger Form und Ausführung hergestellt. Die vorliegende Erfindung bezieht sich vor allem auf die Herstellung von Schokoladenhohlprodukten, insbesondere von 3D-Hohl-Figuren für die Süsswarenindustrie. Die vorliegende Erfindung soll aber nicht auf Schokoladenprodukte beschränkt sein, sie kann bei jedem Verzehrprodukt angewendet werden, welches durch ein Verpressen der entsprechenden Masse in einer Giessform hergestellt wird.

Beispielsweise ist in der DE 102 21 524 A1 ein Verfahren zum Herstellen von Verzehrgütern mit einer äusseren Schale aus einer Masse, die in eine Form eingegeben wird, bekannt, wobei ein temperierter Stempel in diese Masse eintaucht und die Masse zum Erstarren bringt. Da nie genau kalkuliert werden kann, wie gross der Anteil der Masse sein muss, damit eine exakte Schale besteht, wird meist etwas mehr Masse in die Form eingegeben. Bei der hier beschriebenen Erfindung wird ein überschüssiger Anteil der Masse über einen Formrand austreten, wobei die überschüssige Masse am Formrand von der Schale mittels des Stempels abgetrennt wird. Danach erfolgt ein Abschaben dieser überschüssigen Masse von der Form.

Ein weiteres Problem tritt auf, wenn ein gekühlter Stempel zum Formen einer warmen Verzehrmasse verwendet wird. In normaler Umgebungsluft beschlägt dieser gekühlte Stempel, der meist aus Metall besteht. Dieses Beschlagen hat dann eine Eisbildung auf dem Stempel zur Folge, was andererseits wieder zu Wasserflecken auf dem Verzehrgut führen kann. Gleichzeitig muss gewährleistet werden, dass der Stempel sich auch wieder gut aus dem Verzehrgut lösen lässt und das Verzehrgut nicht an dem Stempel haften bleibt. Zu diesem Zweck wurde in der Vergangenheit meist ein Trennmittel auf dem Stempel aufgebracht.

Diesem Nachteil begegnet die DE 197 32 036 A1 dadurch, dass der Taupunkt der das Verzehrgut umgebenden Atmosphäre unter der Temperatur des Stempels gehalten wird. Das bedeutet, dass die Luft um den Stempel herum soweit entfeuchtet wird, dass kein Beschlagen des Stempels mehr stattfindet. Der Stempel bleibt trocken und kann so auch wieder leicht aus dem Verzehrgut entfernt werden. Wasserflecken werden vermieden.

Aus der EP 0 589 820 A1 ist ein Verfahren zum Herstellen von Schokoladenartikel bekannt, wobei ein Formhohlraum mit einer temperierten schokoladenartigen Masse gefüllt wird, die unter Kristallisation von dem Formhohlraum aus und nach Innen erstarrt, um die äussere Gestalt der Schale zu formen. Dabei ist die Temperatur des Formhohlraums niedriger als die Temperatur der temperierten Masse, wobei ein Kühlelement mit einer niedrigeren Temperatur als 0°C in die Masse eingetaucht wird, nachdem diese in den Formhohlraum eingefüllt worden ist. Dieses Kühlelement wird in der Masse in einer vollständig eingetauchten Position für eine vorgegebene Zeitspanne gehalten, um ein vorgegebenes Schalenvolumen zwischen dem Element und dem Formhohlraum zu bilden.

Die DE 298 08 288 U1 beschreibt eine Vorrichtung zum Herstellen von schalenförmiger Körper aus Schokolade, dabei ist eine wenigstens zweiteilige Form mit einem Formunterteil und einem Formoberteil vorgesehen, wobei das Formoberteil als Stempel ausgebildet ist, welcher in einen Formhohlraum eingetaucht wird.

Die DE 198 51 063 A1 beschreibt einen Süsswarenhohlkörper aus mindestens zwei zusammengesetzte, den Süsswarenhohlkörper bildende Süsswarenhohlkörper-Halbschalen, die jeweils lösbar in eine von mindestens zwei dünnwandigen, gleichartigen, miteinander korrespondierenden Formhälften eingeformt sind. Dabei verfügen die Formhälften jeweils über einen im wesentlichen gleichartig ausgebildeten oberen flächigen Randabschnitt, der eine Formhälften-Trennebene definiert, an der die Formhälften mit ihren jeweiligen Randabschnitten aufeinanderliegend zu einem geschlossenen hohlen Formkörper zusammengefügt sind.

Die EP 2 543 258 A1 beschreibt ein Verfahren zur Herstellung einer Konfekthülse. Dabei wird eine zum Verzehr geeignete Flüssigkeit in einen Formhohlraum eingebracht. Diese Flüssigkeit wird anhand eines Stempels, der eine Oberflächentemperatur aufweist, die unter der Erstarrungstemperatur der zum Verzehr geeigneten Flüssigkeit liegt, gegen die Wand des Formhohlraums gedrückt.

Schliesslich zeigt die EP 2 386 208 A1 ein Verfahren zur Herstellung einer mehrschichtigen Konfektschale, wobei eine verzehrbare Flüssigkeit in einem Formhohlraum abgelegt und eine andere verzehrbare Flüssigkeit auf die erste verzehrbare Flüssigkeit in dem Formhohlraum aufgebracht wird. Danach erfolgt ein Pressen der verzehrbaren Flüssigkeiten unter Verwendung eines Stempels, der eine Oberflächentemperatur unter der Erstarrungstemperatur von jeder der verzehrbaren Flüssigkeiten aufweist, um zumindest zwei Schalenschichten zu bilden.

Ein weiteres Problem bei der Herstellung von insbesondere 3D-Hohlprodukten bedeutet das Zusammenfügen von zwei identischen Schalen bzw. Schalenformen. Hierzu müssen die entsprechenden Schalenränder eine möglichst gute Kontaktfläche ausbilden. Dazu schlägt die WO95/32633 A1 vor, dass der Stempel von einem Ring umfasst wird. Allerdings wird zwischen Ring und Stempel eine Ringnut ausgebildet, in die ein Teil der überschüssigen Verzehrgutmasse einfliessen kann. Hierdurch bleibt eine nach oben aufstehende Lippe übrig. Zwei entsprechend geformte Schalen müssen dann der jeweiligen Form entnommen und aufeinandergelegt werden. Beim Aufeinanderlegen werden die jeweiligen Lippen nach innen umgebogen, in der Hoffnung, dass dadurch eine möglichst grosse Kontaktfläche entsteht. Diese Anordnung hat allerdings gravierende Nachteile. Zum einen besteht die grosse Gefahr, dass beim Ausfahren des Stempels aus der hergestellten Schalenform der oberen Lippenbereiche, der in die Ringnut eingeflossen ist, mitgerissen wird. Des Weiteren besteht die Gefahr, dass Schokoladenmasse bzw. Masse des flüssigen Verzehrgutes in den Spalt zwischen Ring und Stempel einfliesst, so dass dieser häufig gereinigt werden muss. Des Weiteren müssen beide Schalenformen zuerst aus ihren jeweiligen Formräumen entnommen werden. Dies kann erst dann geschehen, wenn die Schalenformen erstarrt sind. Beim Zusammenfügen müssen sie dann erst wieder erwärmt werden, damit die oben entstandenen Lippen umgebogen werden können. Ob dann noch die gewünschten Kontaktflächen entstehen, bleibt sehr fraglich.

### Aufgabe

Aufgabe der vorliegenden Erfindung ist es, ein Verfahren und eine Vorrichtung der o.g. Art anzubieten, mit denen sehr gute Kontaktflächen von zwei Schalenformen auf einfache Art und Weise hergestellt werden können.

### Lösung der Aufgabe

Zur Lösung der Aufgabe führt, dass ein zweiter Stempel in die Schalenform eingeführt und durch diesen ein Randbereich der Schalenform aufgestaucht wird.

Das bedeutet, dass die Aufstauchung in einem zweiten Abschnitt der erfindungsgemässen Vorrichtung hergestellt wird, wobei in dem ersten Abschnitt eine Schalenform mit einem absolut definierten Randbereich hergestellt ist. Das Herstellen der Aufstauchung geschieht, ohne dass die Schalenform erneut erwärmt werden muss, sondern der zweite Stempel wird unmittelbar nach dem ersten Stempel, nachdem die Schalenform unter den zweiten Stempel gebracht wurde, in die Schalenform abgesenkt, die zu diesem Zeitpunkt noch verformbar ist. Dies ist ein ganz wesentlicher Vorteil der vorliegenden Erfindung, da nach dem erfindungsgemässen Verfahren das Verzehrgut trotz dem Kontakt mit dem gekühlten Stempel flüssig genug bleibt, dass auch ohne zusätzliche Erwärmung beim Zusammenklappen der Formen eine perfekte Verbindung der Schalen bewirkt wird. Kühlt allerdings der Stempel die Schale so stark ab, dass der aufgestauchte Rand nicht mehr flüssig ist, muss vor dem Zusammenklappen eine Rand-Anwärmung vorgesehen werden. Des Weiteren könnte es auch sein, dass die Kaltpresse an einer Fremd-Anlage installiert wird und bei der Fremd-Anlage die Vorrichtung zum Zusammenklappen erst nach einem längeren Zeitraum erreicht wird, sodass der aufgestaute Rand nicht mehr flüssig ist.

Bevorzugt unmittelbar nach der Aufstauchung werden dann auch zwei Formen mit entsprechend aufgestauchten Schalenformen aufeinander gelegt, so dass auch hier das Verformen der Aufstauchung und das Zusammenfügen der Schalenränder noch in einem relativ weichen Zustand des Verzehrgutes erfolgt. Die Kontaktfläche wird durch die Aufstauchungen wesentlich vergrössert, wobei der übrige Teil der Schalenränder in der zuvor definierten, aufeinander abgestimmten Form bleibt, so dass eine durchgehende gute Kontaktfläche gesichert wird.

Die Aufstauchung selbst erfolgt bevorzugt am Innenrand des Schalenrandes der Schalenform, so dass beim Zusammenfügen von zwei Schalenformen sich die beiden aufeinander treffenden Aufstauchungen nach innen zur Hohlform hin zu einem "Kussmund" zusammenlegen. Hierdurch wird die Kontaktfläche vergrössert.

Damit eine eventuell leicht unebene Form platt gedrückt werden kann, weist der Stempel eine gleichmässige Randkante auf. Durch eine Randkante mit Nut wird die Einpress-Tiefe des Stempels definiert. Dies ist allerdings nicht zwingend, die Randkante kann auch glatt ausgebildet sein, sodass eine frei einstellbare Presstiefe erlaubt ist.

Die Aufstauchung erfolgt dadurch, dass sich eine Aussenkontur des zweiten Stempels von derjenigen des ersten Stempels geringfügig unterscheidet. Der Einfachheit halber kann der zweite Stempel zumindest nahe dem Bereich, an dem die Aufstauchung entstehen soll, verbreitert ausgebildet werden, d.h., der zweite Stempel hat in diesem Bereich einen grösseren Durchmesser als der erste Stempel. Beispielsweise kann hier der zweite Stempel ein vom ersten Stempel im diesem Bereich abweichenden, geringfügig nach aussen aufgehenden Konus von beispielsweise einem Winkel von etwa 15° aufweisen. Diese Gradangabe ist aber nicht zwingend. Diese Verbreiterung bewirkt, dass etwas mehr Verzehrgut aus dem Formhohlraum ausgedrückt wird, wodurch die Aufstauchung entsteht.

Gemäss der vorliegenden Erfindung werden natürlich nicht nur kugelförmige Schalenformen hergestellt, sondern Schalenformen in jeder denkbaren geometrischen Ausgestaltung. Dementsprechend ist auch die Verbreiterung des Stempels bzw. der Begriff Durchmesser zu verstehen. Mit dem Begriff Verbreiterung werden alle möglichen Vorkehrungen umfasst, die es ermöglichen, dass ein geringfügiger Teil des Verzehrguts aufgestaucht wird.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figur 1** eine schematisch dargestellte Seitenansicht eines ersten Teils der erfindungsgemässen Vorrichtung;
**Figur 2** eine schematisch dargestellte Seitenansicht einer ersten Gebrauchslage der erfindungsgemässen Vorrichtung nebst Vergrösserung eines Teilbereichs;
**Figur 3** eine schematisch dargestellte Seitenansicht einer weiteren Gebrauchslage des ersten Teils der erfindungsgemässen Vorrichtung;
**Figur 4** eine schematisch dargestellte perspektivische Ansicht eines weiteren Arbeitsschrittes des erfindungsgemässen Verfahrens;
**Figur 5** eine schematische und perspektivische Ansicht eines zu Figur 4 alternativen weiteren Verfahrensschritts;
**Figur 6** eine schematisch dargestellte Seitenansicht eines Ergebnisses einer Schalenform nach dem ersten Teil der erfindungsgemässen Vorrichtung;
**Figur 7** eine schematisch dargestellte Seitenansicht eines zweiten Teils der erfindungsgemässen Vorrichtung;
**Figur 8** eine Seitenansicht der erfindungsgemässen Vorrichtung nach Figur 7 in einer Gebrauchslage nebst vergrössertem Teilbereich;
**Figur 9** eine schematisch dargestellte Seitenansicht des erfindungsgemässen Teils der Vorrichtung nach Figur 7 in einer weiteren Gebrauchslage;
**Figur 10** eine schematisch dargestellte Seitenansicht eines Teils der erfindungsgemässen Vorrichtung mit einem Ergebnis nach dem weiteren Arbeitsschritt sowie ein vergrössert dargestellter Teilbereich;
**Figur 11** eine perspektivische Ansicht von zwei Vorrichtungsteilen gemäss Figur 10, die zusammengeklappt werden;
**Figur 12** einen Querschnitt durch ein nach dem erfindungsgemässen Verfahren hergestelltes Schokoladenprodukt nebst vergrössertem Teilbereich;
**Figur 13** Seitenansichten von verschiedenen Ausführungsformen eines zweiten Stempels.

Eine erfindungsgemässe Vorrichtung zum Herstellen von einem Schokoladenprodukt weist eine Form 1 auf, in der sich in einem Formraum 2 eine Schokoladenmasse 3 befindet. Dieser Form 2 ist ein erster Stempel 4 zugeordnet.

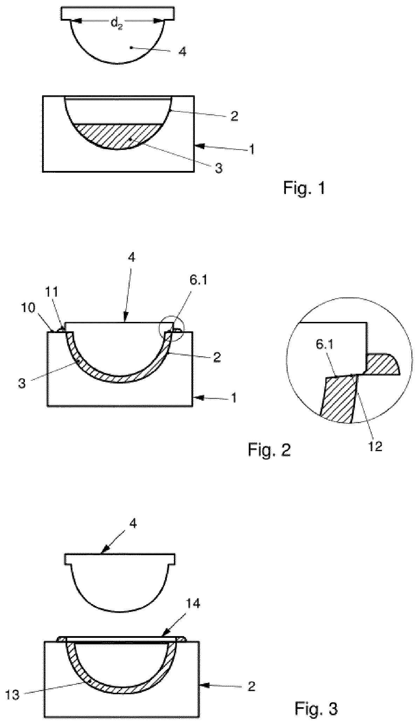

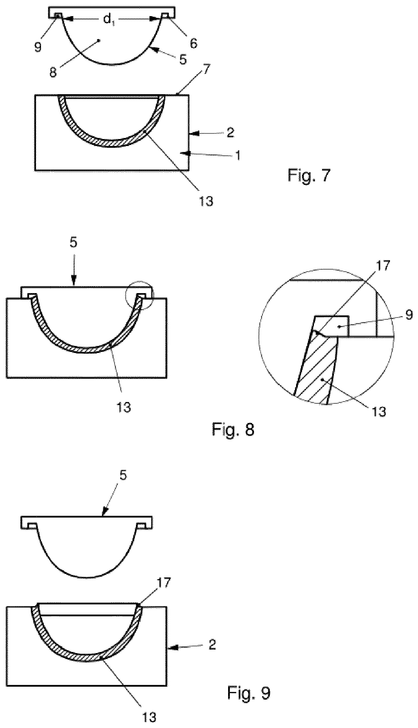

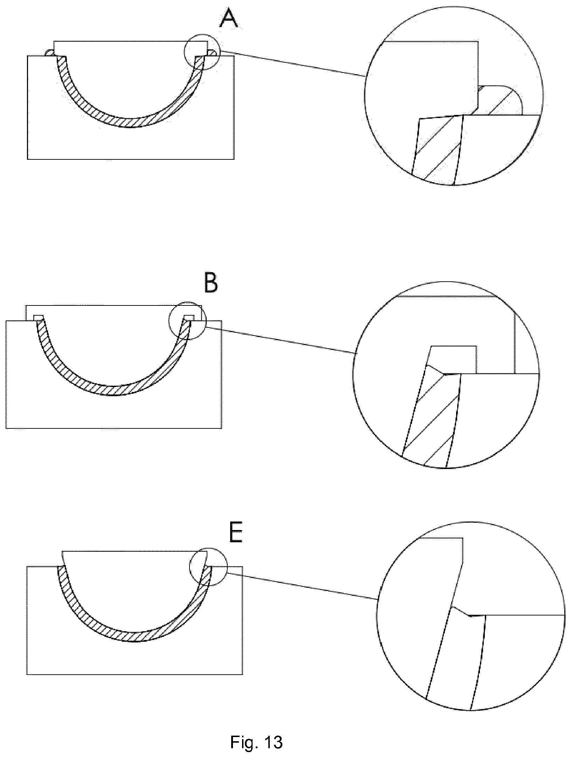

Bei einem zweiten Teil der erfindungsgemässen Vorrichtung gemäss Figur 7 wird der Form 1 ein zweiter Stempel 5 zugeordnet. Dieser besitzt eine Randkante 6 zum Aufsetzen auf einer Oberfläche 7 der Form 1. Zwischen Randkante 6 und einem eigentlichen Stempelkörper 8 ist eine umlaufende Nut 9 vorgesehen. Diese Nut ist allerdings nicht zwingend, wie in Figur 13 gezeigt ist. Die Ausführungsform des zweiten Stempels A entspricht derjenigen des ersten Stempels gemäss Figur 1 und 2, die Ausführungsform des zweiten Stempels B entspricht derjenigen in den Figuren 8 und 9 gezeigt. Gemäss der Ausführungsform E kann auch die Randkante vollkommen weggelassen werden, sodass auch keine Nut vorgesehen ist. In diesem Fall wird die Aufstauchung durch eine tiefere Presstiefe bewirkt.

Des Weiteren besitzt der Stempelkörper 8 im Bereich unterhalb der Nut 9 einen Durchmesser d1, der geringförmig grösser ist als ein Durchmesser d2 des ersten Stempels 4 in diesem Bereich. D.h., der zweite Stempel 5 verbreitert sich geringförmig in diesem oberen Bereich des Stempelkörpers 8, der auch im Bereich der später zu beschreibenden Schalenränder liegt.

Das erfindungsgemässe Verfahren zum Herstellen des Verzehrproduktes, insbesondere des Schokoladenproduktes, verläuft wie folgt:
Gemäss Figur 1 wird in den Formraum 2 der Form 1 ein flüssiges Verzehrprodukt, insbesondere flüssige Schokolade 3 eingefüllt. Danach erfolgt ein Eintauchen des Stempels 4 in den Formraum 2 und in die flüssige Schokolade 3. Bei diesem Stempel 4 handelt es sich um einen gekühlten Stempel, wobei seine Temperatur über dem Taupunkt der das Verzehrgut umgebenden Atmosphäre gehalten wird. Dies wird in der DE 197 32 036 A1 beschrieben, auf die hier besonders Bezug genommen wird. Dadurch wird gewährleistet, dass der Stempel, der mit einer Kühlflüssigkeit von etwa -20°C beaufschlagt wird, nicht beschlägt. Dadurch, dass der Stempel, beispielsweise mit einer Taktzahl von etwa 6 Takten pro Minute in eine 28°C bis 32°C warme Schokolade eintaucht, wird die Temperatur der Stempeloberfläche bis etwa auf 0°C bis -2°C erhöht, während der Taupunkt der das Verzehrgut umgebenden Atmosphäre bei etwa -15°C gehalten wird. Auch bei Schwankungen der Temperatur der Kühlflüssigkeit, der Entfeuchtung der Luft usw. wird so sicher gewährleistet, dass die Temperatur des Stempels bzw. der Stempeloberfläche immer oberhalb dem Taupunkt der das Verzehrgut umgebenden Atmosphäre gehalten wird.

Gemäss Figur 2 trifft nun der Stempel 4 mit einer Randkante 6.1 auf eine Oberfläche 10 der Form 1. Sofern beim Eintauchen des Stempels 4 in die Schokoladenmasse 3 ein Überschuss an Schokoladenmasse aus dem Formraum 2 ausgepresst wird, wird dieser Überschuss 11 von der Randkante 6.1 abgequetscht, wie dies in der DE 102 21 524 A1 beschrieben ist, auf die ebenfalls hier in vollem Umfange Bezug genommen wird. Durch dieses Verfahren entsteht eine Schalenkontur, die exakt dem Zwischenraum zwischen Stempel 4 und Formraum 2 sowie abgeschlossen durch die Randkante 6.1 nachgebildet ist. Vor allem der dadurch entstehende Schalenrand 12, der genau dem Verlauf der Randkante 6.1 entspricht, stellt einen relativ glatten Abschluss dar.

Gemäss Figur 3 ist der Stempel 4 aus der Form 2 herausgefahren, die Schokoladenmasse ist jetzt zumindest an ihrer Oberfläche bzw. dem Bereich ihrer Oberfläche erstarrt und bildet so eine Schalenform 13 aus. Erkennbar ist auch der von der Schalenform 13 separierte Ring 14 des Überschusses 11.

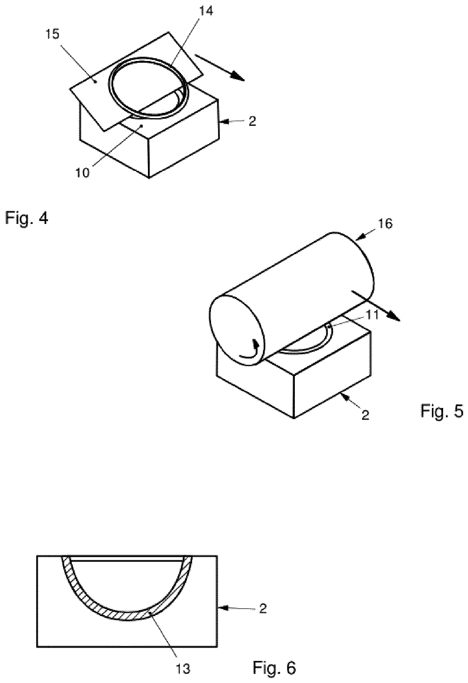

Gemäss Figur 4 kann nun dieser Ring 14 von der Oberfläche 10 der Form 2 durch einen Schaber 15 abgeschnitten werden, wie dies ebenfalls in der DE 102 21 524 A1 beschrieben ist. Alternativ dazu kann der Überschuss 11 auch durch eine Walze 16, genannt Leckwalze, abgewalzt werden. Es entsteht im Ergebnis gemäss Figur 6 eine genau konturierte Schalenform 13.

Nunmehr wird die Form 2 mit der Schalenform 13 unter den zweiten Stempel 5 gemäss Figur 7 transportiert. Auch bei diesem Stempel 5 handelt es sich bevorzugt um einen gekühlten Stempel entsprechend der DE 197 32 036 und der Beschreibung zum ersten Stempel.

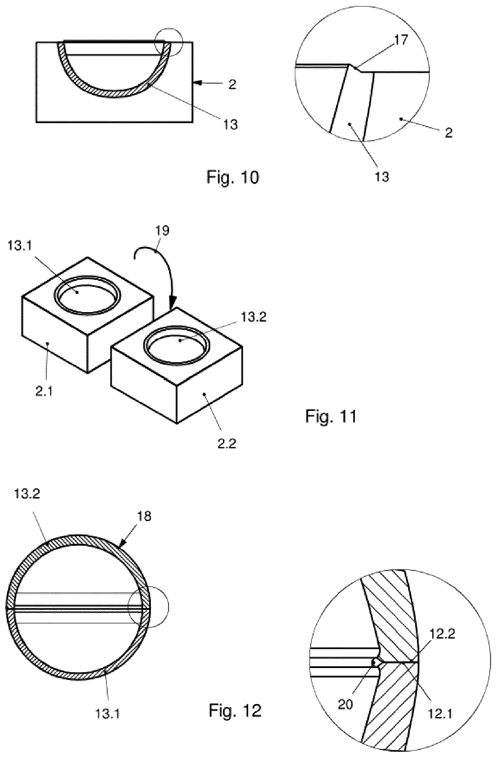

Gemäss Figur 8 wird nunmehr der zweite Stempel 5 in die Schalenform 13 eingetaucht, die lediglich an ihrer Oberfläche erstarrt, im Inneren aber immer noch weich ist. Durch die Verbreiterung des Stempels 5 infolge des geringfügig grösseren Durchmessers d1 gegenüber d2 des Stempels 4 wird aber im oberen Bereich der Schalenform 13 eine Aufstauchung 17 erzeugt, die ähnlich einem Randwulst ausgebildet ist. Dies geschieht durch Verdrängung von Schokoladenmasse im oberen Bereich durch die Verbreiterung des Stempels 5, wobei die Aufstauchung 17 in die Nut 9 ausweichen kann. Die entsprechende fertige Schalenform 13 ist in den Figuren 9 und 10 gezeigt.

Zur Herstellung eines gewünschten Hohlkörpers 18, wie in Figur 12 dargestellt, werden nun zwei Formen 2.1 und 2.2 mit jeweils einer Schalenform 13.1 und 13.2, wie durch den Pfeil 19 in Figur 11 angedeutet, aufeinander geklappt. Die beiden Aufstauchungen 17 treffen dabei aufeinander und bilden einen nach Innen gerichteten "Kussmund" 20 aus zwei Lippen aus. Die Schalenränder 12.1 und 12.2 liegen aber flächig aneinander, so dass eine gute Verbindung gewährleistet ist.

**Bezugszeichenliste**

| | | | | | |
|---|---|---|---|---|---|
| 1 | Form | 34 | | 67 | |
| 2 | Formraum | 35 | | 68 | |
| 3 | Schokoladenmasse | 36 | | 69 | |
| 4 | Erster Stempel | 37 | | 70 | |
| 5 | Zweiter Stempel | 38 | | 71 | |
| 6 | Randkante | 39 | | 72 | |
| 7 | Oberfläche | 40 | | 73 | |
| 8 | Stempelkörper | 41 | | 74 | |
| 9 | Nut | 42 | | 75 | |
| 10 | Oberfläche | 43 | | 76 | |
| 11 | Überschuss | 44 | | 77 | |
| 12 | Schalenrand | 45 | | 78 | |
| 13 | Schalenform | 46 | | 79 | |
| 14 | Ring | 47 | | | |
| 15 | Schaber | 48 | | | |
| 16 | Walze | 49 | | | |
| 17 | Aufstauchung | 50 | | | |
| 18 | Hohlkörper | 51 | | | |
| 19 | Pfeil | 52 | | | |
| 20 | Kussmund | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Herstellen von einem Verzehrprodukt (18), insbesondere Schokoladenprodukt, aus zumindest zwei Schalenformen (13,13.1,13.2), die zumindest teilweise an ihren Schalenrändern (12,12.1,12.2) miteinander verbunden werden, wobei eine flüssige Verzehrmasse (3) in eine Form (2) eingefüllt und danach zumindest ein Stempel (4) in die Verzehrmasse (3) eingetaucht und durch zumindest teilweises Erstarren der Verzehrmasse (3) in der Form dieser Verzehrmasse eine Schalenform (13,13.1,13.2) gegeben wird,
**dadurch gekennzeichnet,**
**dass** ein zweiter Stempel (5) in die Schalenform (13) eingeführt und durch diesen ein Randbereich der Schalenform aufgestaucht wird.

2. Verfahren nach Anspruch 1, **dadurch gekennzeichnet, dass** die Aufstauchung (17) am Innenrand des Schalenrandes (12) der Schalenform (13) erfolgt.

3. Verfahren nach Anspruch 1 oder 2, **dadurch gekennzeichnet, dass** die Aufstauchung (17) von einem in einer Randkante (6) des Stempels (5) eingeformte Nut (9) aufgenommen wird.

4. Verfahren nach wenigstens einem der vorhergehenden Ansprüche, **dadurch gekennzeichnet, dass** der erste Stempel (4) und/oder der zweite Stempel (5) ein gekühlter Stempel ist.

5. Verfahren nach wenigstens einem der vorhergehenden Ansprüche, **dadurch gekennzeichnet, dass** der Taupunkt der den/die Stempel (4,5) umgebenden Atmosphäre unter der Temperatur des/der Stempel/s gehalten wird.

6. Verfahren nach wenigstens einem der vorhergehenden Ansprüche, **dadurch gekennzeichnet, dass** beim Herstellen der Schalenform (13) eine überschüssige Masse (11) am Formrand von der Schalenform (13) mittels des Stempels (4) abgetrennt wird.

7. Vorrichtung zum Herstellen von einem Verzehrprodukt (18), insbesondere Schokoladenprodukt, aus zumindest zwei Schalenformen (13,13.1,13.2), die zumindest teilweise an ihren Schalenrändern (12,12.1,12.2) miteinander verbunden sind,
wobei die Vorrichtung eingerichtet ist, so dass eine flüssige Verzehrmasse (3) in eine Form (2) eingefüllt und danach zumindest ein Stempel (4) in die Verzehrmasse (3) eingetaucht werden kann, und dass durch zumindest teilweises Erstarren der Verzehrmasse (3) in der Form dieser Verzehrmasse eine Schalenform (13, 13.1, 13.2) gegeben wird, wobei
dem zumindest einen Stempel (4) ein weiterer Stempel (5) mit einer vom ersten Stempel (4) abweichenden Aussenkontur nachgeschaltet ist.
**dadurch gekennzeichnet, dass**
der zweite Stempel (5) im Bereich der Schalenränder (12) gegenüber dem ersten Stempel (4) einen grösseren Durchmesser (d1) aufweist bzw. verbreitert ausgebildet ist.

8. Vorrichtung nach Anspruch 7, **dadurch gekennzeichnet, dass** der zweite Stempel (5) im Bereich der Schalenränder (12) gegenüber dem ersten Stempel (4) eine gerade oder konische Erweiterung aufweist.

9. Vorrichtung nach wenigstens einem der Ansprüche 7 bis 8, **dadurch gekennzeichnet, dass** der zweite Stempel (5) eine Randkante (6) aufweist, mit der er der Form (2) aufliegt, wobei in die Randkante (6) im Bereich der Schalenränder (12) eine Nut (9) eingeformt ist.

## Claims

1. Method for producing a consumable product (18), in particular a chocolate product, from at least two shell moulds (13, 13.1, 13.2), which are at least partially moulded at their shell edges (12, 12.1, 12. 2), wherein a liquid consumable mass (3) is filled into a mould (2) and then at least one die (4) is immersed in the consumable mass (3) and a shell mould (13, 13.1, 13.2) is given by at least partial solidification of the consumable mass (3) in the form of this consumable mass,
**characterized by** this,
in that a second die (5) is introduced into the shell mould (13) and a peripheral region of the shell mould is compressed in the upward direction by this die.

2. Method according to claim 1, **characterised in that** the compression (17) takes place at the inner edge of the shell edge (12) of the shell mould (13).

3. Method according to claim 1 or 2, **characterized in that** the compression formation (17) is accommodated by a groove (9) formed in a peripheral edge (6) of the die (5).

4. Method according to at least one of the preceding claims, **characterized in that** the first die (4) and/or the second die (5) is/are a cooled die.

5. Method according to at least one of the preceding claims, **characterized in that** the dew point of the atmosphere surrounding the die(s) (4, 5) is kept below the temperature of the die(s).

6. Method according to at least one of the preceding claims, **characterized in that** during the production of the shell mould (13) an excess mass (11) at the mould periphery is separated off from the shell mould (13) by means of the die (4).

7. Device for producing a consumable product (18), in particular chocolate product, from at least two shell moulds (13, 13.1, 13.2) which are at least partially connected to one another at their shell edges (12, 12.1, 12.2), the device being set up so that a liquid consumable mass (3) can be filled into a mould (2) and then at least one die (4) can be immersed in the consumable mass (3), and in that a shell mould (13, 13.1, 13.2) is given by at least partial solidification of the consumable mass (3) in the form of this consumable mass, wherein the at least one die (4) is followed by a further die (5) with an outer contour deviating from the first die (4), **characterised in that** the second die (5) has a larger diameter (d1) or is designed to be widened in the region of the shell edges (12) compared with the first die (4).

8. Device according to claim 7, **characterized in that** the second die (5) has a rectilinear or conical widening in the region of the shell edges (12) relative to the first die (4).

9. Device according to at least one of claims 7 to 8, **characterised in that** the second die (5) has a peripheral edge (6) by way of which it rests on the mould (2), wherein a groove (9) is formed in the peripheral edge (6) in the region of the shell edges (12).

## Revendications

1. Procédé pour fabriquer un produit alimentaire (18), en particulier un produit de chocolat, à partir d'au moins deux pièces en forme de coquille (13, 13.1, 13.2), qui sont au moins partiellement connectées l'une à l'autre à leurs bords de coquille (12, 12.1, 12.2), dans lequel une masse alimentaire liquide (3) est remplie dans un moule (2) et ensuite au moins un poinçon (4) est plongé dans la masse alimentaire (3) et par solidification au moins partielle de la masse alimentaire (3) dans le moule est conférée une forme de coquille (13, 13.1, 13.2) à cette masse alimentaire,
**caractérisé par le fait**
**qu'**un deuxième poinçon (5) est introduit dans la pièce en forme de coquille (13) et que par ce dernier est refoulée une zone de bord de la pièce en forme de coquille.

2. Procédé selon la revendication 1, **caractérisé par le fait que** le refoulement (17) a lieu sur le bord intérieur du bord de coquille (12) de la pièce en forme de coquille (13).

3. Procédé selon la revendication 1 ou 2, **caractérisé par le fait que** le refoulement (17) est reçu par une rainure (9) formée dans une bordure (6) du poinçon (5).

4. Procédé selon au moins l'une des revendications précédentes, **caractérisé par le fait que** le premier poinçon (4) et/ou le deuxième poinçon (5) est un poinçon refroidi.

5. Procédé selon au moins l'une des revendications précédentes, **caractérisé par le fait que** le point de rosée de l'atmosphère entourant le ou les poinçons (4, 5) est maintenu au-dessous de la température du ou des poinçons.

6. Procédé selon au moins l'une des revendications précédentes, **caractérisé par le fait que**, lors de la réalisation de la pièce en forme de coquille (13), une masse excédante (11) au bord de moule est séparée de la pièce en forme de coquille (13) au moyen du poinçon (4).

7. Dispositif pour fabriquer un produit alimentaire (18), en particulier un produit de chocolat, à partir d'au moins deux pièces en forme de coquille (13, 13.1, 13.2) qui sont au moins partiellement connectées l'une à l'autre à leurs bords de coquille (12, 12.1, 12.2),
dans lequel le dispositif est conçu de sorte qu'une masse alimentaire liquide (3) puisse être remplie dans un moule (2) et ensuite au moins un poinçon (4) puisse être plongé dans la masse alimentaire (3) et que par solidification au moins partielle de la masse alimentaire (3) dans le moule soit conférée une forme de coquille (13, 13.1, 13.2) à cette masse alimentaire,
dans lequel en aval de l'au moins un poinçon (4) est connecté un autre poinçon (5) de contour extérieur différent du premier poinçon (4),
**caractérisé par le fait que**
le deuxième poinçon (5) présente dans la zone des bords de coquille (12), par rapport au premier poinçon (4), un diamètre plus grand (d1) ou est réalisé élargi.

8. Dispositif selon la revendication 7, **caractérisé par le fait que** le deuxième poinçon (5) présente dans la zone des bords de coquille (12), par rapport au premier poinçon (4), un élargissement droit ou conique.

9. Dispositif selon au moins l'une des revendications 7 à 8, **caractérisé par le fait que** le deuxième poinçon (5) présente une bordure (6) par laquelle il repose sur le moule (2), dans lequel est formée, dans la bordure (6) à l'endroit des bords de coquille (12), une rainure (9).
